# EUROPÄISCHE PATENTANMELDUNG

(11) **EP 2 330 030 A2**
(43) Veröffentlichungstag der Anmeldung: **08.06.2011**
(21) Anmeldenummer: 10174017.3
(22) Anmeldetag: 25.08.2010
(51) Int. Cl.: B63H 23/24, B60L 1/00, B60L 11/12, B60W 10/06

(54) **Vorrichtung zum Steuern eines Fahrzeugs**

(30) Priorität: 04.11.2009 DE 202009015027 U
(71) Anmelder: Fischer Panda GmbH, 33104 Paderborn (DE)
(72) Erfinder: Krause, Christian, 33332 G!utersloh (DE); Herbermann, Hans-Joachim, 33102 Paderborn (DE)
(74) Vertreter: Ostermann, Thomas

(57) **Zusammenfassung**

Die Erfindung betrifft eine Vorrichtung zu Steuerung eines Fahrzeugs, insbesondere eines Wasserfahrzeugs, wobei das Fahrzeug ein Antriebssystem aufweist enthaltend eine Energieerzeugungseinrichtung mit einem Verbrennungsmotor, mit einem mit dem Verbrennungsmotor zusammenwirkenden Generator zur Wandlung der im Verbrennungsmotor bereitgestellten mechanischen Energie in elektrische Energie und mit einem Gleichrichter zur Gleichrichtung der vom Generator bereitgestellten Energie, eine Energiespeichereinrichtung mit einem Energiespeicher zur Bevorratung der von dem Generator bereitgestellten Energie und zur bedarfsgerechten Abgabe derselben und eine Energieverteilungseinrichtung zur Verteilung der von der Energieerzeugungseinrichtung und/oder der Energiespeichereinrichtung bereitgestellten Energie an wenigstens einen Elektromotor zum Antrieb eines Propellers und an weitere elektrische Verbraucher, wobei eine zentrale Kontrolleinrichtung mit einer Zentralsteuereinheit angeordnet ist, wobei die Zentralsteuereinheit datentechnisch mit der Energieerzeugungseinrichtung und der Energiespeichereinrichtung und der Energieverteilungseinrichtung gekoppelt ist zur Koordination der Erzeugung, Speicherung und Verteilung der Energie, und dass die zentrale Kontrolleinrichtung Ausgabemittel zur Anzeige von Informationen an einen Nutzer und/oder Eingabemittel zur Eingabe von Signalen durch den Nutzer aufweist.

## Beschreibung

Die Erfindung betrifft eine Vorrichtung zu Steuerung eines Fahrzeugs, insbesondere eines Wasserfahrzeugs, wobei das Fahrzeug ein Antriebssystem aufweist enthaltend eine Energieerzeugungseinrichtung mit einem Verbrennungsmotor, mit einem mit dem Verbrennungsmotor zusammenwirkenden Generator zur Wandlung der im Verbrennungsmotor bereitgestellten mechanischen Energie in elektrische Energie und mit einem Gleichrichter zur Gleichrichtung der vom Generator bereitgestellten Energie, enthaltend eine Energiespeichereinrichtung mit einem Energiespeicher zur Bevorratung der von dem Generator bereitgestellten Energie und zur bedarfsgerechten Abgabe derselben und enthaltend eine Energieverteilungseinrichtung zur Verteilung der von der Energieerzeugungseinrichtung und/oder der Energiespeichereinrichtung bereitgestellten Energie an wenigstens einen Elektromotor zum Antrieb eines Propellers und an weitere elektrische Verbraucher.

Ein marktübliches dieselelektrisches Antriebssystem für Schiffe und andere maritime Objekte besteht im Wesentlichen aus einem Dieselmotor und einem von dem Dieselmotor angetriebenen Generator zur Erzeugung elektrischer Energie und aus einem Elektromotor, der über ein Motorsteuergerät (Umrichter) angesteuert wird und mittels der von dem Generator bereitgestellten Energie einen Propeller (Schiffsschraube) antreibt. Ferner sind Hybridantriebssysteme bekannt, bei denen dem Generator zusätzlich ein Energiespeicher zur Bevorratung von elektrischer Energie zugeordnet ist. Die Energie zum Antrieb des Elektromotors wird hierbei direkt von dem Generator und/oder den dem Energiespeicher zur Verfügung gestellt. Der Energiespeicher dient darüber hinaus zur Versorgung des elektrischen Bordnetzes mit Energie. Derlei Antriebsysteme werden in zunehmender Weise als Hauptfahrantriebe und Hilfsantriebe bei Wasserfahrzeugen, beispielsweise Schiffen, verwendet.

Gegenüber konventionellen, beispielsweise dieselmechanischen Antrieben bietet sich hierbei die Möglichkeit, auf eine starre Kopplung des Verbrennungsmotors mit dem Propeller mittels Antriebswelle zu verzichten. Der Elektromotor, der typischerweise in unmittelbarer Nähe zu dem Propeller angeordnet ist, wird stattdessen elektrisch mit dem Generator bzw. dem Energiespeicher verbunden. Hierdurch ergibt sich eine wesentlich größere geometrische Freiheit bei der Anordnung der Aggregate. Darüber hinaus lässt sich das Wasserfahrzeug über den in einem weiten Drehzahlbereich regelbaren Elektromotor besonders feinfühlig und exakt antreiben und navigieren. Mithin ist es sogar möglich, auf ein separates Ruder zur Richtungssteuerung zu verzichten und stattdessen den mit dem Elektromotor verbundenen Propeller zu schwenken. Der Elektromotor ist hierzu beispielsweise als ein Unterwassermotor ausgebildet, der in einer schwenkbar mit dem Fahrzeug verbundenen Gondel angeordnet ist. Den besonders vorteilhaften Fahr- und Navigationseigenschaften steht jedoch entgegen, dass wesentliche Funktionskomponenten des Antriebssystems, insbesondere der Generator, der Umrichter und der Energiespeicher, steuerungstechnisch für sich allein stehen. Eine Kommunikation zwischen Generator, Energiespeicher, Umrichter und/oder Elektromotor ist bei heutigen preisgünstigen Antriebssystemen nicht realisiert. Stattdessen sind für den Dieselgenerator, das Batteriesteuergerät und die Motorsteuergeräte individuelle Anzeige- und Bediengeräte vorgesehen. Es obliegt hierbei dem Nutzer, das Betriebsverhalten der unterschiedlichen Komponenten durch sein aktives Eingreifen aufeinander abzustimmen und für ein fehlerfreies Zusammenwirken der Komponenten zu sorgen. Gleichwohl bietet das Antriebssystem viele Fehlerquellen, die insbesondere von unerfahrenen Nutzern nicht oder nicht frühzeitig erkannt werden. Fällt beispielsweise der Generator aus, wird der Energiespeicher nicht mehr geladen. Wird dann ein elektrischer Verbraucher nicht abgeschaltet, kann es zu einer Tiefentladung des Energiespeichers kommen mit der Folge, dass sich die sicherheitskritische Antriebs- und Navigationsfunktion des Wasserfahrzeugs nicht aufrechterhalten werden kann.

Aufgabe der vorliegenden Erfindung ist es daher, ein kostengünstiges Antriebsantriebssystem für Fahrzeuge, insbesondere Wasserfahrzeuge, zu schaffen, dass eine hohe Betriebssicherheit und eine geringe Fehleranfälligkeit aufweist.

Zur Lösung dieser Aufgabe ist die Erfindung in Verbindung mit dem Oberbegriff des Patentanspruchs 1 dadurch gekennzeichnet, dass eine zentrale Kontrolleinrichtung mit einer Zentralsteuereinheit angeordnet ist, wobei die Zentralsteuereinheit datentechnisch mit der Energieerzeugungseinrichtung und der Energiespeichereinrichtung und der Energieverteilungseinrichtung gekoppelt ist zur Koordination der Erzeugung, Speicherung und Verteilung der Energie, und dass die zentrale Kontrolleinrichtung Ausgabemittel zur Anzeige von Informationen an einen Nutzer und/oder Eingabemittel zur Eingabe von Signalen durch den Nutzer aufweist.

Der besondere Vorteil der Erfindung besteht darin, dass durch die datentechnische Kopplung einer Energieerzeugungseinrichtung, einer Energiespeichereinrichtung und einer Energieverteilungseinrichtung mit einer Zentralsteuereinheit eine datentechnische Vernetzung der drei Hauptfunktionskomponenten des Antriebssystems erreicht wird. Hierdurch ergeben sich zum einen vollständig neue Möglichkeiten zur Fehlerfrüherkennung sowie zur Zustandsüberwachung der Hauptfunktionskomponenten, wobei Betriebsparameter von der Energieerzeugungseinrichtung, der Energiespeichereinrichtung und der Energieverteilungseinrichtung an die Zentralsteuereinheit übertragen und dort gespeichert bzw. weiterverarbeitet werden. Durch die zentrale Datenerfassung und -verarbeitung kann bewirkt werden, dass mit einem abgestimmten Verhalten aller Hauptfunktionskomponenten auf einen Fehler einer Funktionskomponente reagiert wird, ohne dass ein manuelles Zutun des Nutzers erforderlich ist. Fehler, die auf menschliches Fehlverhalten zurückzuführen sind, können hierdurch wirkungsvoll ausgeschlossen werden. Beispielsweise bei einem Ausfall des Generators und bei einem Entladen des Energiespeichereinrichtung unter einen kritischen Grenzwert alle nicht lebenswichtigen elektrischen Funktionen an Bord des Fahrzeugs deaktiviert werden. Die vorhandene Energie wird dann ausschließlich zum Speisen der Elektromotoren verwendet, so dass ein Mindestmaß an Antriebs- und Navigationsfähigkeit des Fahrzeugs erhalten bleibt.

Zum anderen kann durch das Vorsehen einer zentralen Kontrolleinrichtung mit Ausgabemitteln und Eingabemitteln ein zentrales Führungs-, Bedien- und Kommunikationsmodul geschaffen werden, welches beispielsweise in einem zentralen Gehäuse angeordnet ist und als Ausgabemittel einen Bildschirm, einen Lautsprecher oder Signalleuchten und als Eingabemittel Schaltelemente, Drehregler oder dergleichen aufweist. Ebenfalls ist es möglich, als kombiniertes Eingabe- und Ausgabemittel einen berührungssensitiven Monitor (Touch Screen) vorzusehen. Über den Touch Screen können bedarfsgerecht unterschiedliche Eingabeschaltflächen angezeigt und manuelle Eingaben des Nutzers eingelesen werden.

Nach einer bevorzugten Ausführungsform der Erfindung ist zur datentechnischen Kopplung der Zentralsteuereinheit mit der Energieerzeugungseinrichtung und/oder der Energiespeichereinrichtung und/oder der Energieverteilungseinrichtung ein Datenbus angeordnet. Durch das Vorsehen einer Busverbindung bietet sich eine besonders einfache und kostengünstige Möglichkeit zur Vernetzung der Funktionskomponenten des Antriebssystems. Der Verlege- und Installationsaufwand ist hierbei ungleich einfacher als bei einer individuellen Punkt-zu-Punkt-Verkabelung der Einzelkomponenten mit der Zentralsteuereinheit. Darüber hinaus kann über das Busprotokoll in einfacher Weise eine Hierarchisierung der Funktionskomponenten selbst, des Datentransfers und der von den unterschiedlichen Funktionskomponenten des Antriebssystems übermittelten Signale und Befehle erreicht werden. Ferner können weitere elektrische Verbraucher an den Datenbus angeschlossen werden. Auf diese Weise ist es einfach, auch diese Verbraucher über die zentrale Kontrolleinrichtung zu überwachen bzw. zu steuern.

Als Oberbegriff wird im Rahmen dieser Anmeldung unter dem Begriff "Steuern" auch das Regeln umfasst. Insbesondere kann eine Regelung bzw. ein Regelalgorithmus mittels der Motorsteuereinrichtung bzw. eines Steuermoduls implementiert werden.

Nach einer Weiterbildung der Erfindung ist die Zentralsteuereinheit mit einem dezentralen Steuermodul der Energieerzeugungseinrichtung bzw. mit einem dezentralen Steuermodul der Energiespeichereinrichtung bzw. mit einem dezentralen Steuermodul der Energieverteilungseinrichtung gekoppelt. Durch die Kopplung können globale Steuerparameter von der Zentralsteuereinheit an wenigstens ein dezentrales Steuermodul bzw. lokale Steuerparameter von wenigstens einem dezentralen Steuermodul an die Zentralsteuereinheit übertragen werden. Als Steuerparameter können beispielsweise Sollwertvorgaben, Istwerte oder Steuer- bzw. Regelbefehle übertragen werden. Vorteilhaft kann hierdurch auf die Regelung bzw. das Funktionsverhalten eines dezentralen Steuermoduls eingewirkt werden, wobei Betriebsparameter einer anderen Funktionskomponente berücksichtigt werden können. Beispielsweise kann die Kühlleistung einer elektrisch betriebenen Kühlmittelpumpe erhöht werden, wenn ein Temperatursensor eine erhöhte Temperatur des Elektromotors oder der Energieverteilungseinrichtung anzeigt. Das dezentrale Steuermodul erlaubt eine schnelle Regelung der jeweiligen Funktionskomponente unmittelbar vor Ort. Die überlagerte Zentralsteuereinheit koordiniert verschiedene dezentrale Steuermodule und/oder übernimmt selbst die Steuerung derjenigen Funktionskomponenten, die nicht über ein separates dezentrales Steuermodul verfügen. Durch den modularen, hierarchischen Aufbau der Steuerung kann ein flexibles Antriebssystem aufgebaut werden, in welches sich Komponenten unterschiedlicher Hersteller integrieren lassen.

Nach einer Weiterbildung der Erfindung werden Betriebsparameter der Energieerzeugungseinrichtung, der Energiespeichereinrichtung, der Energieverteilungseinrichtung, des Elektromotors bzw. der weiteren Verbraucher mittels mindestens eines Sensors erfasst. Der mindestens eine Sensor ist über ein analoges bzw. digitales Schnittstellenmodul mit dem Datenbus verbunden, so dass Betriebsparameter von dem Sensor an die Zentralsteuereinheit bzw. an ein dezentrales Steuermodul übertragen werden können. Vorteilhaft können durch die busgestützte Übertragung sensorisch ermittelter Betriebsparameter eine Vielzahl kritischer Funktionskomponenten in besonders einfacher Weise überwacht werden. Sensoren können in einfacher Weise nachgerüstet bzw. ausgetauscht werden, da allein der Anschluss an den Datenbus, nicht jedoch eine Anbindung des Sensors an ein spezielles Steuermodul bzw. die Zentralsteuereinheit erforderlich ist. Auf diese Weise wird die Möglichkeit geschaffen, durch ein nachträgliches Software- und/oder Hardware-Updaten beispielsweise im Rahmen von Wartungsarbeiten zusätzliche Kontroll-, Komfort- und/oder Sicherheitsfunktionen zu realisieren.

Nach einer Weiterbildung der Erfindung sind zwischen der Energieerzeugungseinrichtung und der Energiespeichereinrichtung einerseits und zwischen der Energiespeichereinrichtung und der Energieverteilungseinrichtung andererseits Messmittel angeordnet zur Bestimmung eines Betriebszustands der Energiespeichereinrichtung. Hierzu dient eine Differenzstrom- und -spannungsmessung, wobei die Messmittel mit der Zentralsteuereinheit bzw. dem dezentralen Steuermodul der Energiespeichereinrichtung verbunden sind. Vorteilhaft kann durch das Vorsehen der Messmittel eine Batteriemanagementfunktion realisiert werden, mittel der der Ladezustand des Energiespeichers sowie der Lade- und Laststrom des Energiespeichers sicher und einfach überwacht werden können. Da der Betriebszustand der Energiespeichereinrichtung bekannt ist, können zusätzliche Sicherheits- und Komfortfunktionen realisiert werden. Beispielsweise kann der Generator automatisch aktiviert werden, sobald der Ladezustand des Energiespeichers unter ein vordefiniertes Grenzmaß sinkt. Ebenso ist es denkbar, einzelne nicht sicherheitswesentliche elektrische Verbraucher zu deaktivieren bzw. in ihrer Leistung zu drosseln, wenn der Batteriestrom einen vorgesehenen Höchstwert und/oder der Ladezustand einen kritischen Wert erreicht.

Nach einer Weiterbildung der Erfindung ist wenigstens ein als weiterer Verbraucher dienendes elektrisches Gerät an die Energieversorgungseinrichtung angeschlossen und wird von dieser mit elektrischer Energie versorgt. Dem Gerät ist zudem ein über den Datenbus mit der Zentralsteuereinheit und/oder einem dezentralen Steuermodul verbundenes Schaltmodul zugeordnet, über das das Gerät individuell aktivierbar und/oder deaktivierbar ist. Vorteilhaft ergibt sich hierdurch die Möglichkeit, das Energiemanagement weiter zu verbessern und eine ungewollte Entladung des Energiespeichers zu verhindern. Beispielsweise kann ein elektrischer Verbraucher automatisch nach einer voreingestellten Betriebszeit deaktiviert werden, um zu verhindern, dass der elektrische Verbraucher unbemerkt und unbeabsichtigt aktiviert bleibt. Ebenso ist es möglich, bei Unterschreiten eines vorgegebenen Grenzladezustands des Energiespeichers weniger wichtige elektrische Verbraucher vollständig zu deaktivieren bzw. in ihrer Leistung zu drosseln. Darüber hinaus kann die Aktivierung bestimmter elektrischer Verbraucher gesperrt werden, wenn für diese beispielsweise bei einer Bootcharter nicht gezahlt wurde bzw. keine entsprechende Einweisung erfolgt ist.

Nach einer Weiterbildung der Erfindung weist die Energieverteilungseinrichtung wenigstens einen Frequenzumrichter als ein dezentrales Steuermodul zur drehzahlvariablen Ansteuerung des wenigstens einen Elektromotors und/oder wenigstens ein als ein Inverter ausgebildetes weiteres dezentrales Steuermodul zur Wechselrichtung der von der Energieerzeugungseinrichtung und/oder der Energiespeichereinrichtung bereitgestellten Gleichspannung auf. Durch den drehzahlvariablen Antrieb des Elektromotors mittels Frequenzumrichter kann eine sehr feinfühlige und variable Ansteuerung des Elektromotors bewirkt werden. Der Vortrieb des Wasserfahrzeugs kann hierdurch sehr exakt geregelt und in einem weiten Bereich variiert werden. Durch das Vorsehen des Inverters kann die elektrische Energie, welche von der Energieerzeugungseinrichtung bzw. der Energiespeichereinrichtung bereitgestellt wird, auf eine vorgegebene Wechselspannung, beispielsweise 230 V, eingestellt werden zum Betrieb der das elektrische Bordnetz bildenden elektrischen Verbraucher. Als Verbraucher können dann handelsübliche Geräte, beispielsweise eine Kaffeemaschine, ein Computer oder ein Druckluftkompressor zum Befüllen von Tauschflaschen an das Bordnetz angeschlossen werden.

Nach einer Weiterbildung der Erfindung ist der Energieverteilungseinrichtung ein Transformator mit galvanischer Trennung zugeordnet. Der Trenntransformator ist zwischen der Energieverteilungseinrichtung und einem Kupplungselement zum elektromechanischen Anschluss der Energieverteilungseinrichtung an ein stationäres elektrisches Landstromnetz angeordnet. Die Energieverteilungseinrichtung weist einen als ein Speicherladegerät ausgebildeten und über den Trenntransformator elektrisch mit dem Kupplungselement verbundenen Umrichter auf zur Aufladung des Energiespeichers mit Landstrom. Vorteilhaft kann hierdurch der Energiespeicher statt über einen dieselmotorisch betriebenen Generator allein über das Landstromnetz aufgeladen werden. Insbesondere für kleinere Fahrzeuge, beispielsweise an einem Binnengewässer vorgehaltene Schiffe, kann dann auf das Vorsehen eines Generators in Gänze verzichtet werden. Der Energiespeicher wird hierbei ausschließlich mit Landstrom aufgeladen. Da während des Betriebs die Möglichkeit zur Nachladung des Energiespeichers entfällt, ist ein übergeordnetes Batteriemanagement und eine Überwachung der begrenzten Ressource elektrische Energie hierbei in einem hohen Maße geboten. Der Transformator gewährleistet die galvanische Trennung von Energiespeicher und Bordstromnetz. Als Speicherladegerät kann ein separater Umrichter bzw. der zur Anbindung der Energieerzeugungseinrichtung bzw. der Energiespeichereinrichtung an das Bordstromnetz verwendete Inverter dienen.

Nach einer Weiterbildung der Erfindung ist die Zentralsteuereinheit über einen ersten Datenbus mit der Energieerzeugungseinrichtung und/oder der Energieverteilungseinrichtung und über einen zweiten Datenbus mit der Energiespeichereinrichtung und/oder den weiteren elektrischen Verbrauchern verbunden. Vorteilhaft kann durch das Vorsehen von zwei getrennten Bussystemen eine Priorisierung der Funktionskomponenten auch hardwareseitig abgebildet werden, wobei der Energieerzeugungseinrichtung und/oder der Energieverteilungseinrichtung über den ersten Datenbus eine hohe Priorität und den weiteren Verbrauchern sowie der Energiespeichereinrichtung über den zweiten Datenbus eine geringe Priorität zukommt.

Nach einer Weiterbildung der Erfindung ist die zentrale Kontrolleinheit mit einem Funkmodul gekoppelt zur Übertragung von Daten von einem externen Sender an die zentrale Kontrolleinheit und/oder zum Senden von Daten von der zentralen Kontrolleinheit an einen externen Empfänger. Vorteilhaft kann hierdurch ein Remote-Zugriff auf die Kontrolleinheit realisiert werden. Hierdurch ergibt sich die Möglichkeit, Software-Updates aufzuspielen bzw. Softwarefehler nach ihrer Entdeckung zeitnah zu beheben. Ferner ergibt sich die Möglichkeit, externe Signale, beispielsweise ein GPS-Signal in die zentrale Kontrolleinrichtung einzulesen. Durch den Empfang des GPS-Signals kann in Verbindung mit dem Antriebssystem eine sogenannte elektrische Ankerfunktion realisiert werden, wobei auf das Setzen eines mechanischen Ankers verzichtet wird und das Schiff über eine entsprechende Ansteuerung der Elektromotoren an einer vorgegebenen Position gehalten wird. Durch die Übertragung von Daten an einen externen Empfänger können zum einen Daten an eine externe Diagnoseeinheit übertragen werden. Zum anderen können Betriebsparameter beispielsweise von Charterunternehmen bzw. Reedereien online bzw. zeitnah überwacht werden und für die Abrechnung der Dienstleistung zum Beispiel nach Fahrkilometer oder Einsatzfall dienen. Ebenso kann die Position des Schiffes auf diese Weise extern überwacht werden.

Ausführungsbeispiele der Erfindung werden nachfolgend anhand der Zeichnungen näher erläutert.

Es zeigen:
- Figur 1: eine erste Konfiguration eines Antriebssystems und
- Figur 2: eine zweite Konfiguration des Antriebssystems.

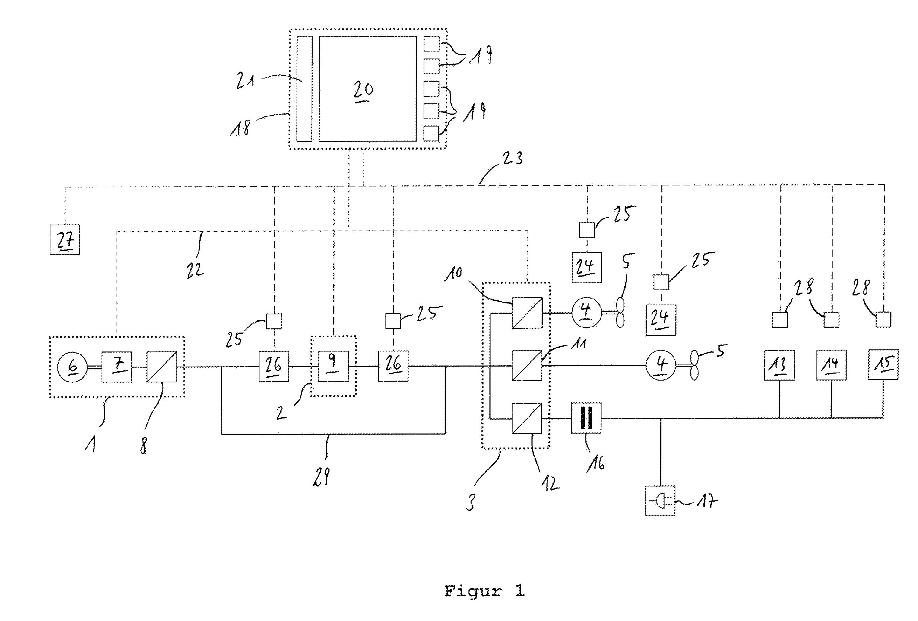

Ein Antriebssystem gemäß Figur 1 dient zum Antreiben und/oder Navigieren eines Fahrzeugs, insbesondere eines Wasserfahrzeugs. Das Antriebssystem besteht im Wesentlichen aus einer Energieerzeugungseinrichtung 1, einer Energiespeichereinrichtung 2, einer Energieverteilungseinrichtung 3 sowie zwei Elektromotoren 4 zum Antrieb eines Propellers 5.

Die Energieerzeugungseinrichtung 1 weist einen mittels eines Dieselmotors 6 angetriebenen Generator 7 auf zur Erzeugung von elektrischer Energie, die in einem dem Generator 7 nachgelagerten Gleichrichter 8 gleichgerichtet und an einen Energiespeicher 9 der Energiespeichereinrichtung 2 bzw. über einen Bypass 29 direkt an die Energieverteilungseinrichtung 3 geleitet wird.

Nach einer alternativen Ausführungsform der Erfindung kann auf das Vorsehen eines Energiespeichers 9 verzichtet werden. Die Energieverteilungseinrichtung 4 ist in diesem Fall direkt mit der Energiespeichereinrichtung 3 gekoppelt.

Die Energieverteilungseinrichtung 3 weist zwei dezentrale Steuermodule 10, 11 zum Antrieb der Elektromotoren 4 auf, wobei je ein Steuermodul 10, 11 einen Elektromotor 4 antreibt. Die dezentralen Steuermodule 10, 11 sind als Frequenzumrichter ausgebildet. Sie wandeln seitens des Energiespeichers 9 bzw. der Energieerzeugungseinrichtung 1 bereitgestellten Gleichstrom in Dreiphasendrehstrom und ermöglichen einen drehzahlvariablen Antrieb der Elektromotoren 4. Weiterhin weist die Energieverteilungseinrichtung 3 ein weiteres dezentrales Steuermodul 12 auf, welches als ein Inverter ausgebildet ist und aus dem Gleichstrom einen Wechselstrom mit konstanter Frequenz (insbesondere 50 Hz oder 60 Hz) und konstanter Spannung (insbesondere 230 V oder 120 V) bereitstellt. Über den Inverter 12 werden weitere elektrische Verbraucher, beispielsweise ein Computer 13, eine Kaffeemaschine 14 oder ein elektrisch betriebener Druckluftkompressor 15 zum Füllen von Tauchflaschen mit Energie versorgt. Selbstverständliche können weitere, nicht dargestellte elektrische Verbraucher vorgesehen sein, über die zusätzliche Komfortfunktionen und/oder Sicherheitsfunktionen realisiert werden.

Die an den Inverter 12 angeschlossenen Geräte 13, 14, 15 bilden das elektrische Bordnetz des Fahrzeugs. Zwischen dem Bordnetz und dem Inverter 12 ist ein Transformator 16 angeordnet. Der Transformator 16 ist als Trenntransformator zur galvanischen Trennung des Bordnetzes von der Energieverteilungseinrichtung 3 ausgebildet. Über den Trenntransformator 16 wird zusätzlich ein Kupplungselement 17 mit dem Inverter 12 verbunden. Das Kupplungselement 17 ist beispielsweise als ein Stecker ausgebildet und dient dazu, das Fahrzeug an ein stationäres elektrisches Landstromnetz anzuschließen. Über den Inverter 12, der zugleich als ein Speicherladegerät dient, können bei Anschluss des Fahrzeugs an das Landstromnetz der Energiespeicher 9 des Fahrzeugs aus dem Landstromnetz geladen und die elektrischen Verbraucher 13, 14, 15 des Bordnetzes mit Landstrom betrieben werden. Über den Trenntransformator 16 ist eine galvanische Trennung zwischen dem Ladestromnetz und dem Energiespeicher 9 realisiert.

Zur Koordination der verschiedenen Funktionskomponenten des Antriebssystems ist eine zentrale Kontrolleinrichtung 18 angeordnet, die über Eingabemittel 19 zur Eingabe von Signalen durch einen Nutzer, über Ausgabemittel 20 zur Ausgabe von Informationen an den Nutzer und über eine Zentralsteuereinheit 21 verfügt. Die Eingabemittel 19 können beispielsweise als Schaltelemente, Schieberegler oder dergleichen ausgebildet sein. Als Ausgabemittel 20 kann ein Bildschirm, ein Lautsprecher oder Signalleuchten dienen. Ebenso ist es möglich, ein kombiniertes Ein- /Ausgabemittel durch das Vorsehen eines berührungsempfindlichen Bildschirms (Touch Screen) zu schaffen.

Die Zentralsteuereinheit 21 ist datentechnisch mit der Energieerzeugungseinrichtung 1, der Energiespeichereinrichtung 2 und der Energieverteilungseinrichtung 3 gekoppelt. Sie dient dazu, die Erzeugung, Speicherung und Verteilung der elektrischen Energie an Bord des Fahrzeugs zu koordinieren und das Betriebsverhalten der einzelnen Funktionskomponenten des Antriebssystems aufeinander abzustimmen. Die Zentralsteuereinheit 21 ist hierzu über einen ersten Datenbus 22 mit der Energieerzeugungseinrichtung 1 und der Energieverteilungseinrichtung 3 verbunden. Über einen zweiten Datenbus 23 ist die datentechnische Kopplung der Zentralsteuereinheit 21 mit der Energiespeichereinrichtung 2 realisiert. Die Zentralsteuereinheit 21 dient hierbei als ein Kommunikationsmaster, der als einziger das Recht hat, unaufgefordert Informationen auf einen der Datenbusse 22, 23 zu geben. Die Energieerzeugungseinrichtung 1, die Energiespeichereinrichtung 2 und die Energieverteilungseinrichtung 3 dienen demgegenüber als untergeordnete Busteilnehmer (Slave), die Daten nur dann über den Datenbus 22, 23 senden können, wenn sie von der Zentralsteuereinheit 21 entsprechend aufgefordert werden.

Das Vorsehen von zwei Datenbussen 22, 23 hat den Vorteil, dass die für einen sicheren und zuverlässigen Betrieb des sicherheitskritischen Antriebs- und Navigationsfunktionen essentiellen Funktionskomponenten Energieerzeugungseinrichtung 1 und Energiespeichereinrichtung 2 mit den dezentralen Steuermodulen 10, 11 für die Elektromotoren 4 über ein ausschließlich zu diesem Zweck vorgesehen ersten Datenbus 22 kommuniziert. Der zweite Datenbus 23 dient demgegenüber der Vernetzung weniger zentraler Funktionskomponenten des Antriebssystems.

An den zweiten Datenbus 23 sind beispielsweise Temperatursensoren 24 angebunden, die dazu dienen, die Temperatur der Elektromotoren 4 zu überwachen und Temperaturdaten über den Datenbus 23 an die Zentralsteuereinheit 21 zu senden. Zur Anbindung der Temperatursensoren 24 an den zweiten Datenbus 23 sind analoge bzw. digitale Schnittstellenmodule 25 vorgesehen, über die die Messdaten der Sensoren 24 in das Kommunikationsprotokoll des zweiten Datenbus 23 eingebunden werden. Als weitere Sensoren sind beispielhaft Strom- und Spannungssensoren 26 über Schnittstellenmodule 25 an den zweiten Datenbus 23 angekoppelt. Hierbei ist ein erster Strom- und Spannungssensor 26 zwischen der Energieerzeugungseinrichtung 1 und der Energiespeichereinrichtung 2 und ein zweiter Strom- und Spannungssensor 26 zwischen der Energiespeichereinrichtung 2 und der Energieverteilungseinrichtung 3 angeordnet. Durch das Vorsehen der zwei Strom- und Spannungssensoren 26 kann über eine Differenzstrom- und Spannungsmessung auf einen Betriebszustand der Energiespeichereinrichtung 2 und/oder einen Ladezustand des Energiespeichers 9 zurückgeschlossen werden. Die Messdaten der Strom- und Spannungssensoren 26 können zu Auswertezwecken beispielsweise an die Zentralsteuereinheit 21 und/oder an ein nicht dargestelltes, dezentrales Steuermodul der Energiespeichereinrichtung 2 übertragen werden.

Zur Koordination des Betriebsverhaltens aller Funktionskomponenten des Antriebssystems können globale Steuerparameter von der Zentralsteuereinheit 21 an wenigstens eins der dezentralen Steuermodule 10, 11, 12 bzw. lokale Steuerparameter der dezentralen Steuermodule 10, 11, 12 an die Zentralsteuereinheit 21 übertragen werden. Als Steuerparameter dienen beispielsweise Sollwertvorgaben, Istwerte oder Betriebsbefehle.

Über den zweiten Datenbus 23 können darüber hinaus weitere Funktionskomponenten des Antriebssystems, beispielsweise ein Fahrstand 27, mit der Zentralsteuereinheit 21 gekoppelt werden. Der Fahrstand 27 dient dazu, Befehlssignale des Nutzers bezüglich Geschwindigkeit und Lastverteilung zwischen den beiden Elektromotoren 4 zu empfangen.

Ferner kann der Datenbus 23 dazu dienen, die elektrischen Verbraucher 13, 14, 15 über jeweils ein individuelles Schaltmodul 28 anzusteuern. Das Schaltmodul 28 kann als ein digitales Schaltmodul ausgebildet sein und dazu dienen, den elektrischen Verbraucher 13, 14, 15 ein- bzw. auszuschalten. Ebenso kann das Schaltmodul 28 als ein analoges Schaltmodul ausgebildet sein, über das der Betriebszustand des elektrischen Verbrauchers 13, 14, 15 individuelle beeinflusst werden kann. Beispielsweise kann auf diese Weise eine Kühlmittelpumpe zur Kühlung der Energieverteilungseinrichtung 3 gesteuert werden, wobei im Wesentlichen die Durchflussmenge an Kühlmittel über die Pumpendrehzahl variiert werden kann.

Durch die Koordination des Betriebsverhaltens der zentralen Funktionskomponenten des Antriebs und der datentechnischen Kopplung der Zentralsteuereinheit 21 mit den dezentralen Steuermodulen 10, 11, 12, der Energieerzeugungseinrichtung 1 und der Energiespeichereinrichtung 2 kann auf vorgegebene Betriebszustände des dieselelektrischen Antriebssystem reagiert werden, ohne dass ein manuelles Eingreifen des Nutzers erforderlich ist.

Beispielsweise kann bei einer unzulässig tiefen Entladung des Energiespeichers 9 durch den Betrieb der Elektromotoren 4 von der Zentralsteuereinheit 21 autark entschieden werden, dass der Generator 7 mittels des Verbrennungsmotors 6 in Betrieb zu nehmen ist. Hierdurch wird seitens des Generators 7 elektrischer Strom zur Aufladung des Energiespeichers 9 bereitgestellt und der Tiefentladung des Energiespeichers entgegengewirkt.

Beispielsweise kann bei einem Betrieb der Elektromotoren 4 unter Maximallast seitens der Zentralsteuereinheit 21 Energie sowohl von dem Generator 7 als auch aus dem Energiespeicher 9 bereitgestellt werden. Sofern erforderlich kann die Bereitstellung von Energie an weitere elektrische Verbraucher 13, 14, 15, die eine geringere Priorität genießen als die Elektromotoren 4, vorübergehend über die Schaltmodule 28 vollständig deaktiviert werden. Hierbei ist es vorstellbar, dass weder der Generator 7 noch der Energiespeicher 9 allein die für den Volllastbetrieb der Elektromotoren 4 notwendige Leistung zur Verfügung stellen können.

Beispielsweise ist es möglich, dass bei einer über die Temperatursensoren 24 gemeldeten unzulässig hohen Temperatur der Elektromotoren 4 seitens der Zentralsteuereinheit 21 die Antriebsleistung zurückgenommen und/oder die Kühlleistung erhöht wird.

Beispielsweise kann bei einer schleichenden Entladung des Energiespeichers 9 durch eine dauerhafte Entnahme der elektrischen Energie zum Betrieb der elektrischen Verbraucher 13, 14, 15 eine automatische Abschaltung derselben über die Schaltmodule 28 und/oder eine Wiederaufladung des Energiespeichers 9 durch Inbetriebnahme der Energieerzeugungseinrichtung 1 bewirkt werden.

Beispielsweise kann aufgrund der Zusammenführung von Sensordaten, Steuerparametern und Betriebszuständen der verschiedenen Funktionsmodule in der Zentralsteuereinheit 21 eine Zustandsüberwachung (Condition Monitoring) bzw. eine Fehlerfrüherkennung realisiert werden, die erst durch die Zusammenführung der Messergebnisse und Betriebsparameter der verteilt angeordneten Funktionskomponenten in der Zentralsteuereinheit 21 möglich wird. Die Zentralsteuereinheit 21 kann beispielsweise ein klassisches Steuer- bzw. Regelkonzept für den Antrieb der Elektromotoren 4 mit einer variablen bzw. festen Drehzahl realisieren. Ebenso ist es durch das Zusammenführen der Betriebsdaten möglich, die Schiffssteuerung mittels Fuzzy-Logik zu realisieren.

In den vorstehend beispielhaft beschriebenen Betriebsszenarien kann die Steuereinheit aufgrund der Vernetzung der verschiedenen Funktionskomponenten des Antriebssystems entweder vollständig selbst über die einzuleitenden Maßnahmen entscheiden und deren Einleitung veranlassen. Alternativ kann der Nutzer von der Zentralsteuereinheit 21 entsprechende Handlungsvorschläge vorgelegt bekommen, die beispielsweise über Ausgabemittel 20 der Kontrolleinrichtung 20 angezeigt werden. Der Nutzer kann dann über das Einleiten entsprechender Maßnahmen entscheiden und gibt hierzu über die Eingabemittel 19 Befehle an die Zentralsteuereinheit 21 bzw. ein das dezentrale Steuermodul 10, 11, 12. Ferner ist es möglich, dass der Nutzer über die Eingabemittel 19 die weiteren elektrischen Verbraucher 13, 14, 15 zentral ein- bzw. ausschaltet.

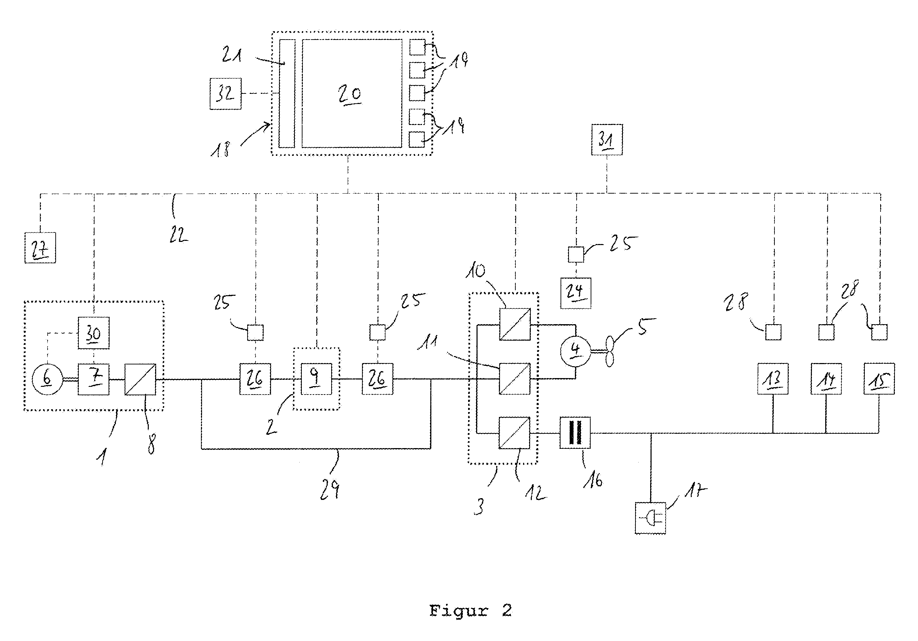

Nach einer alternativen Ausführungsform der Erfindung gemäß Figur 2 dienen die zwei dezentralen Steuermodule 10, 11 zum Antrieb eines einzigen Elektromotors 4. Der Elektromotor 4 ist zur Gewährleistung eines sicheren Betriebs redundant ausgebildet, wobei zur Bildung der Redundanz zwei Wicklungen vorgesehen sind, von denen eine erste Wicklung über das erste dezentrale Steuermodul 10 und eine zweite Wicklung über das zweite dezentrale Steuermodul 11 angesteuert werden. Auf diese Weise kann der Elektromotor 4 - wenn auch eventuell mit reduzierter Leistung - beim Ausfall einer Wicklung bzw. eines dezentralen Steuermoduls 10, 11 fortbetrieben werden.

Gleiche Bauteile und Bauteilfunktionen sind mit den gleichen Bezugszeichen gekennzeichnet.

Zur datentechnischen Kopplung der Zentralsteuereinheit 21 mit den Funktionsmodulen des Antriebssystems ist ein einziger Datenbus 22 vorgesehen, an dem alle dargestellten Busteilnehmer angebunden sind. Auf die Ausbildung eines zweiten Datenbusses wird verzichtet. Die Priorisierung der einzelnen Busteilnehmer kann über das Busprotokoll erreicht werden. Ebenso ist es möglich, auf eine Priorisierung vollständig zu verzichten.

Die Energieerzeugungseinrichtung 1 weist ein eigenes dezentrales Steuermodul 30 auf, welches zur Steuerung des Dieselmotors 6 und des Generators 7 dient. Das dezentrale Steuermodul 30 ist hierzu über den Datenbus 22 mit der Zentralsteuereinheit 21 verbunden, so dass globale Steuerparameter von der Zentralsteuereinheit 21 an das dezentrale Steuermodul 30 und lokale Steuerparameter von dem dezentralen Steuermodul 30 an die Zentralsteuereinheit 21 übertragen werden können.

Als zusätzlicher Busteilnehmer ist ein GPS-Sensor 31 angeordnet, über den Positionssignale empfangen und via Datenbus 22 an die Zentralsteuereinheit 21 geleitet werden können. Die Zentralsteuereinheit 21 kann die Positionsangaben zur Navigation weiterverarbeiten bzw. entsprechende Informationen über die Ausgabemittel 20 an den Nutzer weitergeben.

Ferner ist die Zentralsteuereinheit 21 der Kontrolleinrichtung 18 mit einem Funkmodul 32 gekoppelt. Mittels des Funkmoduls 32 können Informationen von extern empfangen und an die Kontrolleinrichtung 18 bzw. die nachgelagerten Funktionskomponenten übertragen werden. Beispielsweise kann auf diese Weise mittels Ferndatenzugriff (Remote Access) auf das System zugegriffen werden, um Fehler auszulesen oder ein Software-Updaten aufzuspielen. Ebenso können Daten von der Kontrolleinrichtung 18 über das Funkmodul 32 an extern übertragen werden. Beispielsweise können Positionsinformationen oder Informationen zu Fehlerfällen oder dergleichen nach extern gesendet werden.

Nach einer alternativen, nicht dargestellten Ausführungsform der Erfindung kann die Zuordnung der verschiedenen Funktionsmodule zu zwei oder mehr Datenbussen 22, 23 nahezu beliebig vorgenommen werden. Beispielsweise können das nicht dargestellte dezentrale Steuermodul für die Energiespeichereinrichtung 2 und/oder die Strom- und Spannungssensoren 26 über den ersten Datenbus 22 mit der Zentralsteuereinheit 21 kommunizieren. Ebenso ist es möglich, den Fahrstand 27 statt über den zweiten Datenbus 23 über den ersten Datenbus 22 anzusteuern. Beispielhaft ist es ferner möglich, einen weiteren Datenbus anzuordnen. Ebenso kann auf die Ausbildung eines Datenbusses 22, 23 verzichtet werden und stattdessen ein drahtloses Netzwerk eingerichtet oder ein eine sternförmige Verkabelung der Zentralsteuereinheit 21 mit den Funktionskomponenten des Antriebssystems und/oder des Bordnetzes realisiert werden.

## Patentansprüche

1. Vorrichtung zu Steuerung eines Fahrzeugs, insbesondere eines Wasserfahrzeugs, wobei das Fahrzeug ein Antriebssystem aufweist
- enthaltend eine Energieerzeugungseinrichtung mit einem Verbrennungsmotor, mit einem mit dem Verbrennungsmotor zusammenwirkenden Generator zur Wandlung der im Verbrennungsmotor bereitgestellten mechanischen Energie in elektrische Energie und mit einem Gleichrichter zur Gleichrichtung der vom Generator bereitgestellten Energie,
- enthaltend eine Energiespeichereinrichtung mit einem Energiespeicher zur Bevorratung der von dem Generator bereitgestellten Energie und zur bedarfsgerechten Abgabe derselben und
- enthaltend eine Energieverteilungseinrichtung zur Verteilung der von der Energieerzeugungseinrichtung und/oder der Energiespeichereinrichtung bereitgestellten Energie an wenigstens einen Elektromotor zum Antrieb eines Propellers und an weitere elektrische Verbraucher,
**dadurch gekennzeichnet, dass** eine zentrale Kontrolleinrichtung (18) mit einer Zentralsteuereinheit (21) angeordnet ist, wobei die Zentralsteuereinheit (21) datentechnisch mit der Energieerzeugungseinrichtung (1) und der Energiespeichereinrichtung (2) und der Energieverteilungseinrichtung (3) gekoppelt ist zur Koordination der Erzeugung, Speicherung und Verteilung der Energie, und dass die zentrale Kontrolleinrichtung (18) Ausgabemittel (20) zur Anzeige von Informationen an einen Nutzer und/oder Eingabemittel (19) zur Eingabe von Signalen durch den Nutzer aufweist.

2. Vorrichtung nach Anspruch 1, **dadurch gekennzeichnet, dass** zur datentechnischen Kopplung der Zentralsteuereinheit (21) mit der Energieerzeugungseinrichtung (1) und/oder der Energiespeichereinrichtung (2) und/oder der Energieverteilungseinrichtung (3) ein Datenbus (22, 23) angeordnet ist.

3. Vorrichtung nach Anspruch 1 oder 2, **dadurch gekennzeichnet, dass** die Zentralsteuereinheit (21) mit einem dezentralen Steuermodul (30) der Energieerzeugungseinrichtung (1) und/oder mit einem dezentralen Steuermodul (30) der Energiespeichereinrichtung und/oder mit einem dezentralen Steuermodul (10, 11, 12) der Energieverteilungseinrichtung (3) gekoppelt ist derart, dass globale Steuerparameter von der Zentralsteuereinheit (21) an wenigstens ein dezentrales Steuermodul (10, 11, 12, 30) und/oder lokale Steuerparameter von dem wenigstens einen dezentralen Steuermodul (10, 11, 12, 30) an die Zentralsteuereinheit (21) übertragbar sind.

4. Vorrichtung nach einem der Ansprüche 1 bis 3, **dadurch gekennzeichnet, dass** Betriebsparametern der Energieerzeugungseinrichtung (1) und/oder der Energiespeichereinrichtung (2) und/oder der Energieverteilungseinrichtung (3) und/oder des wenigstens eines Elektromotors (4) und/oder der weiteren Verbraucher (13, 14, 15) mittels mindestens eines Sensors (24, 26) erfassbar sind, wobei der mindestens eine Sensor (24, 26) über ein analoges und/oder digitales Schnittstellenmodul (25) mit dem Datenbus (22, 23) verbunden ist zur Übertragung der Betriebsparameter an die Zentralsteuereinheit (21) und/oder an ein dezentrales Steuermodul (10, 11, 12, 30).

5. Vorrichtung nach einem der Ansprüche 1 bis 4, **dadurch gekennzeichnet, dass** Messmittel (26) zwischen der Energieerzeugungseinrichtung (1) und der Energiespeichereinrichtung (2) einerseits und zwischen der Energiespeichereinrichtung (2) und der Energieverteilungseinrichtung (3) andererseits angeordnet sind zur Bestimmung eines Betriebszustands der Energiespeichereinrichtung (3) mittels einer Differenzstrom- und -spannungsmessung, und dass die Messmittel (26) mit der Zentralsteuereinheit (21) und/oder dem dezentralen Steuermodul (10, 11, 12, 30) der Energiespeichereinrichtung (1) verbunden sind.

6. Vorrichtung nach einem der Ansprüche 1 bis 5, **dadurch gekennzeichnet, dass** wenigstens ein als weiterer Verbraucher (13, 14, 15) dienendes elektrisches Gerät an die Energieverteilungseinrichtung (3) angebunden ist zur Versorgung des Geräts (13, 14, 15) mit elektrischer Energie und dass dem Gerät (13, 14, 15) ein über den Datenbus (22, 23) mit der Zentralsteuereinheit (21) und/oder ein dezentrales Steuermodul (10, 11, 12, 30) verbundenes Schaltmodul (28) zugeordnet ist, wobei das Gerät (13, 14, 15) von der Zentralsteuereinheit (21) und/oder dem dezentralen Steuermodul (10, 11, 12, 30) über das Schaltmodul (28) aktivierbar und/oder deaktivierbar ist.

7. Vorrichtung nach einem der Ansprüche 1 bis 6, **dadurch gekennzeichnet, dass** die Energieverteilungseinrichtung (3) wenigstens einen Frequenzumrichter (10, 11) als ein dezentrales Steuermodul (10, 11) zur drehzahlvariablen Ansteuerung des wenigstens einen Elektromotors (4) und/oder wenigstens ein als ein Inverter (12) ausgebildetes weiteres dezentrales Steuermodul (30) zur Wechselrichtung der von der Energieerzeugungseinrichtung (1) und/oder der Energiespeichereinrichtung (2) bereitgestellten Gleichspannung aufweist.

8. Vorrichtung nach einem der Ansprüche 1 bis 7, **dadurch gekennzeichnet, dass** der Energieverteilungseinrichtung (3) ein Transformator (16) mit galvanischer Trennung zugeordnet ist, wobei der Trenntransformator (16) zwischen der Energieverteilungseinrichtung (3) und einem Kupplungselement (17) zum elektromechanischen Anschluss der Energieverteilungseinrichtung (3) an ein stationäres elektrisches Landstromnetz angeordnet ist und wobei die Energieverteilungseinrichtung (3) einen als ein Speicherladegerät ausgebildeten und über den Trenntransformator (17) elektrisch mit dem Kupplungselement verbundenen Umrichter (Inverter 12) aufweist zur Aufladung des Energiespeichers (9) mit Landstrom.

9. Vorrichtung nach einem der Ansprüche 1 bis 8, **dadurch gekennzeichnet, dass** die Zentralsteuereinheit (21) über einen ersten Datenbus (22, 23) mit der Energieerzeugungseinrichtung (1) und/oder der Energieverteilungseinrichtung (3) und über einen zweiten Datenbus (23) mit der Energiespeichereinrichtung (2) und/oder den weiteren Verbrauchern (13, 14, 15) verbunden ist.

10. Vorrichtung nach einem der Ansprüche 1 bis 9, **dadurch gekennzeichnet, dass** die zentrale Kontrolleinrichtung (18) mit einem Funkmodul (32) gekoppelt ist zur Übertragung von Daten von einem externen Sender an die zentrale Kontrolleinrichtung (18) und/oder zum Senden von Daten von der zentralen Kontrolleinheit (18) an einen externen Empfänger.
